# EUROPÄISCHE PATENTSCHRIFT

(11) **EP 3 049 329 B1**
(45) Veröffentlichungstag und Bekanntmachung des Hinweises auf die Patenterteilung: **14.11.2018**
(21) Anmeldenummer: 14780413.2
(22) Anmeldetag: 25.09.2014
(51) Int. Cl.: B65B 1/30, B65B 1/36, B65B 3/30, B65B 3/32, B30B 15/30, B65B 1/38, G01F 11/18

(54) **DOSIEREINRICHTUNG**
DOSING APPARATUS
APPAREIL DU DOSAGE

(30) Priorität: 25.09.2013 DE 202013008523 U
(43) Veröffentlichungstag der Anmeldung: 03.08.2016
(73) Patentinhaber: Harro Höfliger Verpackungsmaschinen GmbH, 71573 Allmersbach im Tal (DE)
(72) Erfinder: MEYER, Hermann, 71573 Allmersbach im Tal (DE); BRECHT, Sven, 71573 Allmersbach im Tal (DE)
(74) Vertreter: Zurhorst, Stefan
(86) Internationale Anmeldenummer: PCT/EP2014/002603
(87) Internationale Veröffentlichungsnummer: WO 2015/043748

(56) Entgegenhaltungen:
- EP-A1- 2 019 041
- US-A- 3 865 281
- US-A- 6 041 980

## Beschreibung

Die Erfindung betrifft eine Dosiereinrichtung zum volumetrischen Dosieren von rieselfähigem Füllgut der im Oberbegriff des Anspruchs 1 angegebenen Gattung.

Für die Dosierung von trockenem, rieselfähigen Füllgut wie Pulver, Granulat oder dgl. insbesondere im Bereich der Wasch- und Reinigungsmittel, der Pharmazie oder der Nahrungsergänzungsmittel wird verbreitet eine volumetrische Dosierung vorgenommen, mittels derer eine Teilmenge des Füllgutes volumetrisch abgegrenzt und dann in eine Zielkavität (Behälter, Kapsel etc.) überführt wird.

Bei einer sogenannten Kammerdosierung sind hierfür ein Gehäuse und ein relativ zum Gehäuse bewegbarer Dosierschieber vorgesehen, wobei das Gehäuse und der Dosierschieber zusammen eine Dosierkammer begrenzen. Das Füllgut fließt dabei in die Dosierkammer, welche durch ihr Volumen die zu dosierende Pulver- oder Granulatmenge bestimmt. In der üblichen Bauform solcher Dosiereinrichtungen ist eine horizontale Bewegbarkeit des Dosierschiebers vorgesehen. Eine im Gehäuse vorhandene Zuführöffnung wird hierbei dadurch verschlossen, dass der Dosierschieber horizontal bewegt und dabei die Dosierkammer von der Zuführöffnung fortbewegt wird. Mit der gleichen Horizontalbewegung wird die Dosierkammer in Überdeckung mit einer Auslassöffnung des umgebenden Gehäuses gebracht, wodurch die Dosierkammer nach unten geöffnet wird. Das Füllgut fließt bzw. rieselt aus der Kammer in das zu befüllende Behältnis.

In Folge der horizontalen Bewegung ist ein seitlicher Versatz zwischen Zufuhr- und Auslassöffnungen erforderlich, in der das Füllgut vollständig abgegrenzt und damit dosiert wird, was einen erheblichen seitlichen Platzbedarf nach sich zieht. Die Verwendung eines solchen Dosierers ist deshalb bei mehrreihigen Füllstellen zum gleichzeitigen Befüllen von in mehreren Reihen angeordneten Zielbehältern eingeschränkt oder gar ausgeschlossen. Zudem ist zu nennen, dass bei der horizontalen Bewegung immer eine geringe Menge von Pulver zur Seite hin austritt. Diese Menge akkumuliert sich und muss immer wieder in bestimmten Zeitintervallen manuell abgesaugt werden, was eine Reduzierung der Produktionszeiten zur Folge hat. Eine Volumenanpassung der Dosierkammern bei sich ändernden Anforderungen an das gewünschte Zielvolumen des Pulvers bzw. des Granulats ist aufwändig. Zwischen dem horizontal bewegten Dosierschieber und dem Gehäuse liegen großflächige Gleitflächen, die bei der genannten Relativbewegung aneinander reiben. Pulver oder Staub kann zwischen die Gleitflächen gelangen, was die Reibung erhöht und den Verschleiß fördert. Wenn das Füllgut in der zu befüllenden Kavität zusätzlich verdichtet werden muss, ist dies bei Dosierern mit horizontalem Verschluss ebenfalls schwierig. Zudem kann ein unerwünschtes Nachrieseln des Füllgutes aus der Dosierkammer nicht immer vermieden werden.

Eine weitere Bauform eines Kammerdosierers ist aus US 3,865,281 A bekannt: Ein horizontal angeordneter Zylinder mit einem darin angeordneten Kolben bildet eine Dosierkammer. Eingangsseitig des Zylinders befindet sich eine Ventilanordnung, mittels derer der Zylinder abwechselnd mit einem Vorratsbehälter und mit einem Zielbehälter verbunden wird. Im zurückgezogenen Zustand des Kolbens ist der Zylinder mit dem Vorratsbehälter verbunden, aus dem frisches Material in den Zylinder fließt. Danach schaltet die Ventilanordnung derart um, dass der Zylinder mit dem Zielbehälter verbunden wird. Es erfolgt eine Hubbewegung des Kolbens, mittels derer das Material in den Zielbehälter ausgestoßen wird. Der Hubraum des Zylinders gibt das Volumen der abgemessenen Teilmenge vor.

Der Erfindung liegt die Aufgabe zugrunde, eine gattungsgemäße Dosiereinrichtung derart weiterzubilden, dass eine kompaktere Bauform erzielt und der Reinigungsbedarf verringert ist.

Diese Aufgabe wird durch eine Dosiereinrichtung mit den Merkmalen des Anspruchs 1 gelöst.

Nach der Erfindung ist vorgesehen, dass der Dosierschieber als Vertikalschieber mit einer in gewöhnlicher Betriebsposition vertikalen Hubachse ausgestaltet ist, dass das Gehäuse eine sich in Richtung der Hubachse erstreckende Führungsfläche für den Dosierschieber aufweist, und dass der Dosierschieber eine mit der Führungsfläche korrespondierende und an der Führungsfläche gleitend anliegende Begrenzungsfläche aufweist. Ausgehend von der Begrenzungsfläche ist in den Dosierschieber eine Dosiervertiefung und/oder ausgehend von der Führungsfläche in das Gehäuse eine Dosiervertiefung eingebracht, wobei in einer Hubposition des Dosierschiebers, in der die Dosiervertiefung durch die Führungsfläche und/oder durch die Begrenzungsfläche abgedeckt ist, die Dosierkammer durch die Dosiervertiefung, die Führungsfläche und/oder die Begrenzungsfläche gebildet ist.

In einem entsprechenden erfindungsgemäßen Betriebsverfahren wird der als Vertikalschieber ausgebildete Dosierschieber zunächst in eine Ausgangsposition gebracht, in der die Dosiervertiefung zumindest teilweise nicht von der Führungsfläche und/oder der Begrenzungsfläche abgedeckt ist. In dieser Ausgangsposition des Vertikalschiebers rieselt das Granulat oder ein ähnliches Füllgut aus einem Vorratsbehälter in die Dosiervertiefung. Hiervon ausgehend wird der Vertikalschieber zunächst in eine Mittelposition gebracht, in der die offene Seite der Dosiervertiefung durch die Führungsfläche und/oder durch die Begrenzungsfläche vollständig abgedeckt ist. Gleichzeitig liegt die Führungsfläche dichtend an der Begrenzungsfläche des Dosier- bzw. Vertikalschiebers oberhalb und unterhalb der Dosiervertiefung an. In diesem Zustand ist eine hinsichtlich ihres Volumens geometrisch exakt definierte Dosierkammer durch die Dosiervertiefung und die innere Führungsfläche gebildet, welche vollständig mit dem rieselfähigen Füllgut befüllt ist. Hierdurch wird eine Teilmenge des Füllgutes abgegrenzt, dessen Volumen dem Volumen der Dosierkammer entspricht.

In Folge einer weiteren vertikalen Hubbewegung des Dosierschiebers in eine dritte Position tritt die Dosiervertiefung aus ihrer Abdeckung zumindest teilweise heraus, so dass die in der Dosiervertiefung enthaltene abgemessene Teilmenge des Füllgutes vollständig herausrieseln kann und als volumetrisch dosierte Einheitsmenge in eine darunter befindliche Zielkavität gelangt. Anschließend wird der Dosierschieber wieder in seine oben beschriebene Ausgangsposition zurück gebracht, von der aus ein weiterer Dosiervorgang mit den vorstehend beschriebenen Verfahrensschritten ausgeführt werden kann.

Die erfindungsgemäße Dosiereinrichtung ist einfach im Aufbau und kostengünstig herstellbar. Da allein eine vertikale Hubbewegung des Dosierschiebers erforderlich ist, ist die Anordnung bezüglich ihrer quer zur vertikalen Hubachse liegenden Seitenrichtungen sehr kompakt. Da kein Platz für seitliche Hubbewegungen erforderlich ist, können mehrere Kombinationen von Vertikalschiebern und zugeordneten Führungsöffnungen eng nebeneinander angeordnet werden. Dicht beieinander liegende Zielbehälter können gleichzeitig befüllt werden. Das Vorgenannte gilt für alle Seitenrichtungen, so dass selbst mehrere, dicht beieinander liegende Reihen von Zielbehältern beispielsweise in matrixförmiger Anordnung gleichzeitig befüllt werden können.

Aufgrund der reinen Vertikalbewegung des Dosierschiebers entstehen nur kleinflächige Reibpaarungen zwischen der inneren Führungsfläche der im Gehäuse ausgebildeten Führungsöffnung und der äußeren Begrenzungsfläche des Dosierschiebers. Die entsprechenden Flächen können mit geringem Aufwand geometrisch exakt aufeinander abgestimmt werden, so dass das Eindringen von verschleißerhöhendem Pulver oder Staub unterbunden, zumindest aber auf ein Minimum reduziert werden kann. Hervorzuheben ist noch, dass durch die erfindungsgemäße, in seitlicher bzw. radialer Richtung geschlossene Bauform keine Pulververluste wie beim Stand der Technik in seitlicher Richtung stattfinden können. Wartungs- und Reinigungsaufwand sind auf ein Minimum reduziert. Die Ausbeute des bereitgestellten Füllgutes ist maximiert.

Insgesamt entsteht ein geringer Verschleiß. Darüber hinaus weist der Vertikalschieber im Vergleich zu Horizontalschiebern nach dem Stand der Technik ein geringeres Eigenvolumen und damit eine geringere Masse auf, so dass hohe Taktraten gefahren werden können.

In einer bevorzugten Ausführungsform ist im Gehäuse eine sich entlang der genannten Hubachse erstreckende Führungsöffnung mit einer inneren Führungsfläche für den Dosierschieber ausgebildet. Der Dosierschieber weist eine mit der inneren Führungsfläche korrespondierende äußere Begrenzungsfläche auf. Ausgehend von der äußeren Begrenzungsfläche ist in den Dosierschieber eine Dosiervertiefung eingebracht. In einer Hubposition des Dosierschiebers, in der die Dosiervertiefung durch die innere Führungsfläche vollständig abgedeckt ist, ist die Dosierkammer durch die Dosiervertiefung zusammen mit der inneren Führungsfläche gebildet. Es entsteht eine kompakte, koaxiale Bauform, bei der der Dosierschieber auch als Verdichtungselement eingesetzt werden kann. Bei geringem seitlichen Platzbedarf kann eine Vielzahl von einzelnen Dosiereinrichtungen dicht an dicht angeordnet werden, um damit eng beieinander liegende Zielkavitäten zu befüllen.

In einer weiteren vorteilhaften Ausführungsform umfasst das Gehäuse einen sich entlang der Hubachse erstreckenden zentralen Dosierzapfen mit einer äußeren Führungsfläche für den Dosierschieber, wobei der Dosierschieber als eine den Führungszapfen in Umfangsrichtung umschließende Dosierhülse ausgebildet ist und eine mit der äußeren Führungsfläche korrespondierende innere Begrenzungsfläche aufweist. Die Dosiervertiefung ist ausgehend von der äußeren Führungsfläche in den Führungszapfen eingebracht, wobei in einer Hubposition der Dosierhülse, in der die Dosiervertiefung durch die innere Begrenzungsfläche abgedeckt ist, die Dosierkammer durch die Dosiervertiefung und die innere Begrenzungsfläche gebildet ist. Die dosierende Hubbewegung der äußeren Dosierhülse ist getrennt von einem nachfolgenden Verdichtungsvorgang. Eine optionale Verdichtungsbewegung des zentralen Führungszapfens hat keine nachteilige Wechselwirkung mit dem Füll- und Dosiervorgang.

Bei einer weiteren zweckmäßigen Ausführungsform ist im Gehäuse ein sich entlang der Hubachse erstreckender Ringspalt ausgebildet, der innenseitig durch einen zentralen Führungszapfen mit einer äußeren Führungsfläche sowie außenseitig durch ein Gehäuseaußenteil mit einer inneren Führungsfläche für den Dosierschieber begrenzt ist. Der Dosierschieber ist als eine im Ringspalt gleitend geführte Dosierhülse ausgebildet und weist eine mit der äußeren Führungsfläche korrespondierende innere Begrenzungsfläche sowie eine mit der inneren Führungsfläche korrespondierende äußere Begrenzungsfläche auf. Mindestens eine Dosiervertiefung ist durch ein die Dosierhülse durchbrechendes Fenster gebildet, wobei in einer Hubposition der Dosierhülse, in der die mindestens eine Dosiervertiefung durch die innere und die äußere Führungsfläche abgedeckt ist, die Dosierkammer durch die Dosiervertiefung, die innere Führungsfläche und die äußere Führungsfläche gebildet ist. Im Gehäuseaußenteil ist ein mit dem Fenster korrespondierender Auslasskanal ausgebildet. Auch hier entfällt die potentiell nachteilige Wechselwirkung zwischen einerseits Dosieren und Füllen, und andererseits Verdichten. Außerdem können mit nur einer Dosiervorrichtung mehrere Zielkavitäten gleichzeitig befüllt und die Füllung verdichtet bzw. vergleichmäßigt werden.

Es kann zweckmäßig sein, den als Vertikalschieber ausgebildeten Dosierschieber beispielsweise aus einem Flachmaterial mit rechteckigem Querschnitt herzustellen. Hierbei bietet sich die Möglichkeit, eine oder mehrere Dosiervertiefungen auf einer oder zwei bezüglich der Hubachse gegenüberliegenden Seiten anzuordnen. Bevorzugt ist der Dosierschieber bezüglich der Hubachse als Rotationskörper ausgeführt, wobei er die Dosiervertiefung ringförmig umläuft und dabei die Begrenzungsfläche und/oder die Führungsfläche in einen unteren Flächenabschnitt und einen oberen Flächenabschnitt aufteilt. Dementsprechend ist die korrespondierende Führungsfläche bzw. die korrespondierende Begrenzungsfläche zylindrisch ausgestaltet. Durch die Ausgestaltung als Rotationskörper können mit geringem Aufwand sehr genaue Fertigungstoleranzen erzielt werden. In der Folge ist das gewünschte Dosiervolumen exakt einstellbar. Andererseits können aufgrund der hohen Fertigungsgenauigkeit und aufgrund des Fehlens von Ecken und Kanten exakt definierte Reibpaarungen zwischen der Führungsfläche und der Begrenzungsfläche hergestellt werden, die im Betrieb einen weiter verringerten Verschleiß aufweisen.

Für die geometrische Ausgestaltung der Dosiervertiefung kommen verschiedene, nahezu beliebige Formen in Betracht. Bevorzugt weist die Dosiervertiefung eine untere Deckfläche und eine obere Deckfläche auf, wobei im Längsschnitt der Dosiereinrichtung betrachtet die untere Deckfläche aus der Dosiervertiefung herausführend geneigt und/oder die obere Deckfläche in die Dosiervertiefung hineinführend geneigt ist. Bei einer derart schräg liegenden oberen Deckfläche wird in der Eintrittsposition des Dosierschiebers der Eintritt des rieselfähigen Füllgutes in die Dosiervertiefung begünstigt, während in der Austrittsposition des Dosierschiebers der Austritt des Füllgutes aus der Dosiervertiefung durch die schräg liegende untere Deckfläche ebenfalls begünstigt wird.

In vorteilhafter Weiterbildung der Erfindung ist im Gehäuse unterhalb der Führungsöffnung ein Dichtsitz vorgesehen, wobei am Dosierschieber unterhalb der Dosiervertiefung eine zum Dichtsitz korrespondierende, bevorzugt schräge und insbesondere konische Dichtfläche ausgebildet ist. Da nach erfolgter Dosierung und Befüllung der Zielkavität der Dosierschieber wieder an seiner Ausgangsposition angehoben wird, liegt auch dessen Dichtfläche dann am Dichtsitz an. Ein Nachrieseln von Pulverresten ist zuverlässig unterbunden, so dass die Dosiergenauigkeit weiter gesteigert werden kann. Weiter wird vermieden, dass solche nachrieselnden Pulverreste beispielsweise auf Siegelflächen von Blisterverpackungen oder dergleichen gelangen, so dass nach erfolgter Dosierung und Befüllung der Zielbehälter zuverlässig und dicht abgesiegelt werden kann. Außerdem sind die schräge Dichtfläche und der schräge Dichtsitz selbstreinigend, da die entsprechenden Oberflächen in der Flussrichtung des Füllgutes geneigt sind und somit das Füllgut selbsttätig der Schwerkraft folgt.

In einer vorteilhaften Ausführungsform umfasst das Gehäuse und/oder der Dosierschieber ein unteres Schieberteil und ein oberes Schieberteil, wobei am unteren Schieberteil eine untere Deckfläche und am oberen Schieberteil eine obere Deckfläche der Dosiervertiefung ausgebildet sind. Das untere Schieberteil (18) und das obere Schieberteil (19) sind in ihrer in Richtung der Hubachse (5) gemessenen Relativposition gegeneinander einstellbar. Hierdurch kann mit einfachen Mitteln je nach Bedarf eine Volumenanpassung der Dosiervertiefung bzw. der Dosierkammer und damit eine Anpassung der Dosiermenge des Füllgutes vorgenommen werden.

Je nach Bedarf kann es zweckmäßig sein, dass der Dosierschieber an seinem unteren Ende einen Verdichtungsstempel aufweist. Durch einen entsprechenden Vertikalhub des Dosierschiebers lässt sich das bereits in die Zielkavität eingefüllte Dosiergut innerhalb des gleichen Arbeitstaktes um ein gewünschtes Maß verdichten.

Ausführungsbeispiele der Erfindung sind nachstehend anhand der Zeichnung näher beschrieben. Es zeigen:
- Fig. 1: in einer schematischen Längsschnittdarstellung eine Dosiereinrichtung mit einem Gehäuse und mit einem als Vertikalschieber ausgebildeten Dosierschieber, wobei der Dosierschieber in eine obere Ausgangsposition angehoben ist, in der das Füllgut in eine Dosiervertiefung des Vertikalschiebers rieselt,
- Fig. 2: die Anordnung nach Fig. 1 mit einer abgesenkten Hubposition des Dosierschiebers, in der die Dosiervertiefung durch eine innere Führungsfläche einer Führungsöffnung des Gehäuses abgedeckt ist, und in der die Dosierkammer durch die Dosiervertiefung gebildet ist,
- Fig. 3: die Anordnung nach Fig. 2 mit weiter abgesenktem Dosierschieber, wobei das Füllgut aus der Dosiervertiefung des Vertikalschiebers in eine Zielkavität rieselt,
- Fig. 4: die Anordnung nach Fig. 3 mit in eine unterste Position abgesenktem Dosierschieber, wobei ein am Dosierschieber ausgebildeter Verdichtungsstempel das Füllgut in der Zielkavität verdichtet,
- Fig. 5: eine Variante der Anordnung nach Fig. 1 mit feststehendem inneren Gehäuseteil in Form eines Dosierzapfens und mit einem Dosierschieber in Form einer äußeren Dosierhülse,
- Fig. 6: Die Anordnung nach Fig. 5 mit angehobener Dosierhülse zur Bildung der Dosierkammer,
- Fig. 7: die Anordnung nach den Fig. 5 und 6 mit weiter angehobener Dosierhülse in ihrer Auslassposition,
- Fig. 8: in einer schematischen Längsschnittdarstellung eine alternative Ausführungs-form der Dosiereinrichtung mit einem Gehäuse und mit einem Dosierschieber, wobei der Dosierschieber als eine in einem Ringspalt des Gehäuses geführte Dosierhülse ausgebildet und in eine obere Ausgangsposition angehoben ist, in der das Füllgut in eine Dosiervertiefung des Vertikalschiebers rieselt,
- Fig. 9: die Anordnung nach Fig. 8 mit einer abgesenkten Hubposition der Dosierhülse, in der mehrere Dosiervertiefungen in Form von Fenstern der Dosierhülse durch einen inneren Führungszapfen und eine äußere Führungsfläche einer Führungsöffnung des Gehäuses abgedeckt ist, und in der die Dosierkammern durch die Fenster in der Dosierhülse gebildet sind,
- Fig. 10: die Anordnung nach Fig. 9 mit weiter abgesenkter Dosierhülse, wobei das Füllgut aus den Fenstern der Dosierhülse in radial außen angeordnete Zielkavitäten rieselt,
- Fig. 11: die Anordnung nach Fig. 10 mit radial äußeren und abgesenkten Verdichtungs-elementen in Form von Verdichtungsstempeln, die das Füllgut in der Zielkavität verdichten.

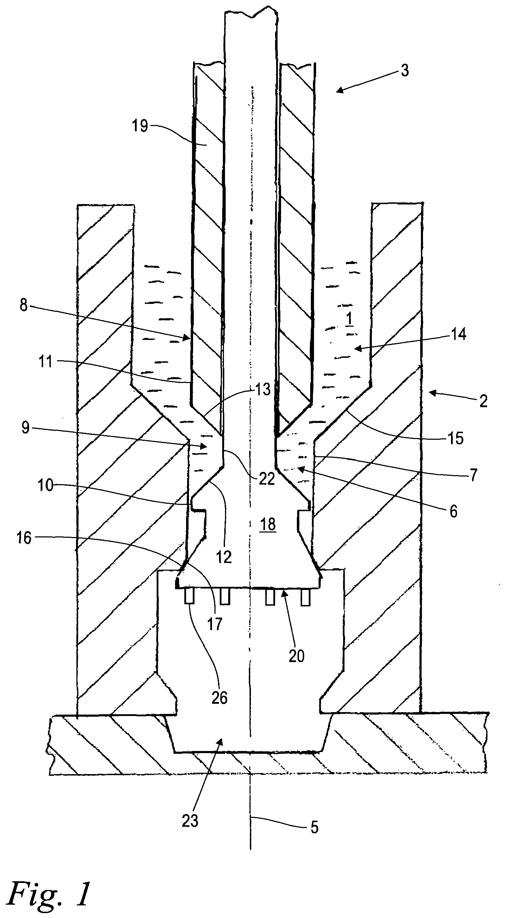

Die Fig. 1 bis 4 zeigen in einer schematischen Längsschnittdarstellung ein erstes Ausführungsbeispiel einer erfindungsgemäßen Dosiereinrichtung in verschiedenen, aufeinanderfolgenden Verfahrensschritten. Die Dosiereinrichtung ist zum volumetrischen Dosieren von rieselfähigem Füllgut, insbesondere von Pulver oder Granulat 1 vorgesehen. Das trockene Füllgut kann ein Wasch-, Spül- oder allgemein ein Reinigungsmittel, ein pharmazeutisches Füllgut oder beispielsweise auch ein Nahrungsergänzungsmittel sein. Nachfolgend wird beispielhaft auf das Granulat 1 Bezug genommen, wobei sämtliche Erläuterungen auch für andere Füllgüter gelten. Von einer größeren Menge des Granulats 1 wird mittels der gezeigten Dosiereinrichtung eine Teilmenge abgezweigt, volumetrisch dosiert und als dosierte Zielmenge in eine Zielkavität 23 überführt. Die Zielkavität 23 kann eine tiefgezogene, insbesondere wasserlösliche Folienverpackung, eine Schlauchbeutelverpackung, eine Blisterverpackung, eine Kapsel, eine Pressöffnung einer Tablettenpresse, ein Zwischenbehälter oder eine beliebige andere Aufnahme sein.

Die Dosiereinrichtung umfasst ein Gehäuse 2 und einen relativ zum Gehäuse 2 bewegbaren Dosierschieber 3. Das Gehäuse 2 ist ortsfest positioniert. Die zunächst leere Zielkavität 23 wird für den Dosier- und Befüllvorgang unterhalb des Gehäuses 2 bereitgestellt und nach erfolgter Befüllung gegen eine andere, leere Zielkavität 23 ersetzt. Die gezeigte Anordnung aus Dosiereinrichtung und Zielkavität 23 ist in ihrer gewöhnlichen Betriebsposition gezeigt, wobei eine vertikale Hubachse 5 zumindest näherungsweise in Gewichtskraftrichtung bzw. parallel dazu liegt. Der Dosierschieber 3 ist als Vertikalschieber ausgeführt, erstreckt sich entlang der vertikalen Hubachse 5 und ist in Richtung der vertikalen Hubachse 5 relativ zum Gehäuse 2 auf und ab verschiebbar.

Im Gehäuse 2 ist eine sich entlang der Hubachse 5 erstreckende Führungsöffnung 6 ausgebildet, die entlang der Hubachse 5 einen konstanten Querschnitt mit einer geschlossen umlaufenden inneren Führungsfläche 7 aufweist. Der Querschnitt der Führungsöffnung 6 kann beispielsweise rechteckig oder polygonal sein und ist im gezeigten bevorzugten Ausführungsbeispiel kreisförmig. Aus dem kreisförmigen Querschnitt in Verbindung mit dem entlang der vertikalen Hubachse 5 konstanten Querschnitt folgt eine zylindrische Ausgestaltung der Führungsöffnung 6.

Der Dosierschieber 3 weist eine mit der inneren Führungsfläche 7 geometrisch korrespondierende äußere Begrenzungsfläche 8 auf, die in Umfangsrichtung vollständig, in Richtung der Hubachse 5 teilweise von der inneren Führungsfläche 7 umschlossen wird. Im Bereich der ungestörten Begrenzungsfläche 8 ist also der Querschnitt des Dosierschiebers 3 identisch zum Querschnitt der Führungsöffnung 6, hier also kreisförmig. Bei einer vertikalen Hubbewegung des Dosierschiebers 3 gleitet die äußere Begrenzungsfläche 8 zumindest näherungsweise spalt- und spielfrei entlang der im Gehäuse 2 ausgebildeten inneren Führungsfläche 7.

Ausgehend von der äußeren Begrenzungsfläche 8 ist in den Dosierschieber 3 eine Dosiervertiefung 9 eingebracht. Die Dosiervertiefung 9 kann einseitig relativ zur Hubachse 5 ausgeformt sein. Es können aber auch mehrere Dosiervertiefungen 9 in Richtung der Hubachse 5 übereinander und/oder auf verschiedenen Seiten relativ zur Hubachse 5 vorgesehen sein. Im gezeigten Ausführungsbeispiel ist der Dosierschieber 3 bezüglich der Hubachse 5 als Rotationskörper ausgeführt, wobei die Dosiervertiefung 9 ringförmig um die Hubachse 5 umläuft und dabei die Begrenzungsfläche 8 in einen unteren Flächenabschnitt 10 und einen oberen Flächenabschnitt 11 aufteilt. Damit ist die Dosiervertiefung 9 bezogen auf die Hubachse 5 nach unten durch eine vom unteren Flächenabschnitt 10 ausgehende untere Deckfläche 12, nach oben durch eine vom oberen Flächenabschnitt 11 ausgehende obere Deckfläche 13 und radial nach innen durch eine Innenfläche 22 begrenzt. Die untere Deckfläche 12, die obere Deckfläche 13 und die Innenfläche 22 laufen um die Hubachse 5 um. Ausgehend von dem unteren Flächenabschnitt 10 der Begrenzungsfläche 8 verläuft die untere Deckfläche 12 im gezeigten Längsschnitt radial nach innen und dabei schräg nach oben zur Innenfläche 22. Damit ist die untere Deckfläche 12 für den späteren, weiter unten beschriebenen Entleerungsvorgang für das Füllgut aus der Dosiervertiefung 9 herausführend geneigt. Ausgehend vom oberen Flächenabschnitt 11 verläuft die obere Deckfläche 13 radial nach innen und schräg nach unten zur Innenfläche 22. Damit ist die obere Deckfläche 13 für den anfänglichen, weiter unten beschriebenen Befüllungsvorgang für das Füllgut in die Dosiervertiefung 9 hineinführend geneigt. Es kann zweckmäßig sein, dass nur eine der beiden Deckflächen 12, 13 oder keine davon diesen schrägen Verlauf aufweist. Durch den gezeigten schrägen Verlauf verjüngt sich die Dosiervertiefung 9 ausgehend von der äußeren Begrenzungsfläche 8 entlang der Hubachse 5 zur Hubachse 5 hin im gezeigten Längsschnitt.

Nachfolgend wird neben weiteren konstruktiven Details noch ein erfindungsgemäßes Dosier- und Füllverfahren für das Granulat 2 beschrieben. In einem ersten Verfahrensschritt ist der Dosierschieber 3 in eine obere Ausgangsposition angehoben, wie dies in Fig. 1 dargestellt ist. Hierbei ist der Dosierschieber 3 so weit angehoben, dass die Dosiervertiefung 9 zumindest teilweise nach oben aus der im Gehäuse 2 ausgebildeten Führungsöffnung 6 bzw. über die innere Führungsfläche 7 hervorsteht. Der obere Flächenabschnitt 11 der Begrenzungsfläche 8 ist vollständig aus der Führungsöffnung 6 herausgezogen, während der untere Flächenabschnitt 11 der Begrenzungsfläche 8 innerhalb der Führungsöffnung 6 liegt und dicht von der inneren Führungsfläche 7 umschlossen ist. Oberhalb der Führungsöffnung 6 ist im Gehäuse 2 eine Vorratskammer 14 ausgebildet, deren Querschnitt größer als der Querschnitt des Dosierschiebers 3 im Bereich seiner Begrenzungsfläche 8 ist. Hierdurch entsteht in der gezeigten angehobenen Ausgangsposition des Dosierschiebers 3 eine freie Verbindung zwischen der Vorratskammer 14 und der Dosiervertiefung 9. In der Vorratskammer 14 ist Füllgut, hier eine größere Menge von Granulat 1 bevorratet, welches aufgrund der nach unten wirkenden Gewichtskraft selbsttätig in die Dosiervertiefung 9 rieselt und diese vollständig ausfüllt. Unterstützend kann auch ein nicht dargestellter Aktuator vorgesehen sein, der den genannten Rieselvorgang und die vollständige Befüllung der Dosiervertiefung 9 begünstigt. Außerdem weist die Vorratskammer 14 einen Boden 15 auf, der radial von außen nach innen und zudem noch schräg nach unten zur Führungsöffnung 6 hin führt. Auch dies begünstigt insbesondere in Verbindung mit der schräg liegenden oberen Deckfläche 13 den Füllguteintritt in die Dosiervertiefung 9. Die Neigungswinkel der beiden Deckflächen 12, 13 und des Bodens 15 relativ zur Hubachse 5 betragen im gezeigten Ausführungsbeispiel etwa 45° und können bevorzugt jeweils in einem Bereich von 30° bis 60° liegen. Es können aber auch andere Neigungswinkel zweckmäßig sein.

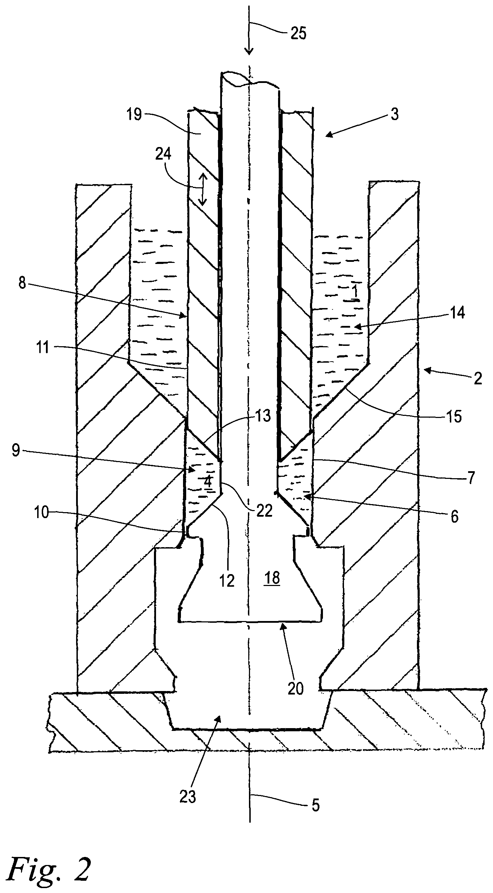

Ausgehend von der Ausgangsposition nach Fig. 1 wird der als Vertikalschieber ausgestaltete Dosierschieber 3 in einem zweiten Verfahrensschritt entsprechend einem Pfeil 25 nach unten verfahren, wobei er zunächst die in Fig. 2 dargestellte Relativposition zum Gehäuse 2 erreicht. In dieser Relativposition ist die radial äußere, offene Seite der Dosiervertiefung 9 durch die innere Führungsfläche 7 der Führungsöffnung 6 vollständig abgedeckt. Die axiale Erstreckung der inneren Führungsfläche 7 ist größer als die axiale Erstreckung der offenen Seite der Dosiervertiefung 9, so dass die Führungsfläche 7 gleichermaßen am unteren Flächenabschnitt 10 und am oberen Flächenabschnitt 11 der Begrenzungsfläche 8 dichtend anliegt. In der gezeigten Relativposition ist die Dosiervertiefung 9 vollständig verschlossen. Es kann weder Füllgut eintreten noch austreten. Vielmehr ist durch die Dosiervertiefung 9 in Verbindung mit der Führungsfläche 7 eine geschlossene, hinsichtlich ihres Volumens exakt definierte Dosierkammer 4 gebildet, die durch die untere Deckfläche 12, die obere Deckfläche 13, die Innenfläche 22 und die innere Führungsfläche 7 begrenzt ist, und mittels derer eine Teilmenge des Granulats 1 mit gleichem Volumen abgemessen und dadurch volumetrisch dosiert wird.

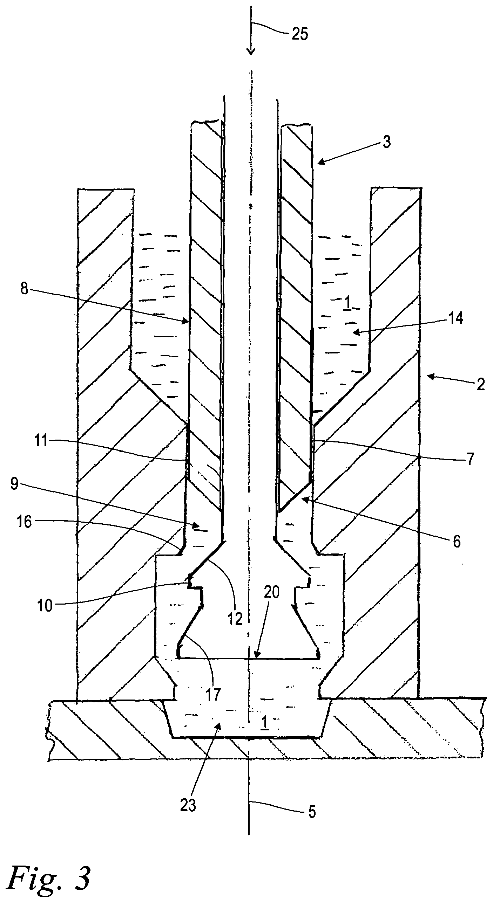

Fig. 3 zeigt die Anordnung nach Fig. 2, wobei der Dosierschieber 3 im nächsten Verfahrensschritt relativ zu seiner Position nach Fig. 2 in Richtung des Pfeiles 25 weiter nach unten verschoben ist. Hierbei ragt die Dosiervertiefung 9 zumindest teilweise nach unten aus der Führungsöffnung 6 bzw. der unteren Führungsfläche 7 so weit heraus, dass der untere Flächenabschnitt 11 frei liegt und nicht mehr von der Führungsfläche 7 umschlossen ist. Gleichwohl liegt aber der obere Flächenabschnitt 11 abgedichtet in der Führungsöffnung 6, so dass von oben kein Granulat 1 nachrieseln kann. Die Dosiervertiefung 9 ist nun nach unten geöffnet, indem sich ein hier ringförmiger Spalt zwischen dem unteren Flächenabschnitt 11 und dem unteren Ende der Führungsöffnung 6 bzw. einem dort ausgebildeten Dichtsitz 16 öffnet. Die in Fig. 2 dargestellte Dosierkammer 4 ist geöffnet. Hierdurch tritt das volumetrisch abgemessene Granulat 1 infolge der wirkenden Gewichtskraft aus der Dosiervertiefung 9 aus und rieselt in die darunter bereitgehaltene Zielkavität 23, wobei der genannte Austrittsvorgang durch die schräg liegende untere Deckfläche 12 begünstigt wird. Um dies zu ermöglichen, wird das untere Ende 20 des Dosierschiebers 3 auf Abstand zur Zielkavität 23 gehalten. Die Zielkavität 23 ist schließlich vollständig mit der volumetrisch dosierten Teilmenge des Granulats 1 befüllt.

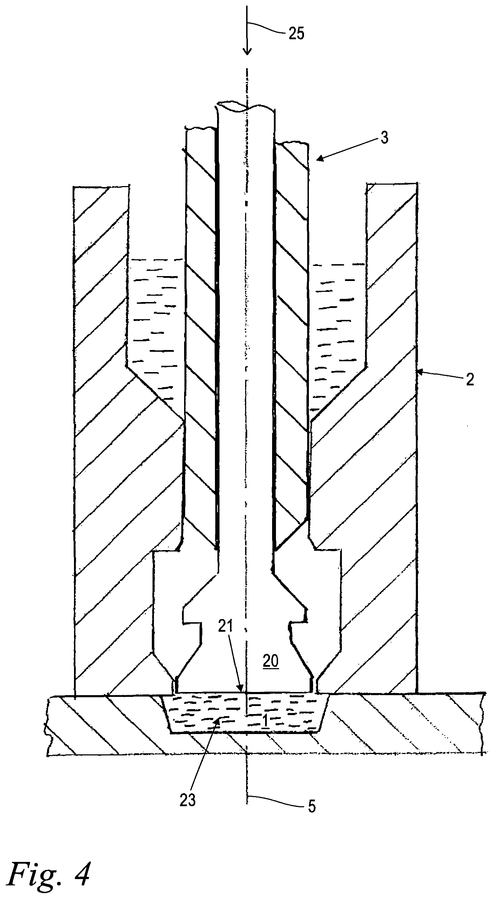

Optional kann es zweckmäßig sein, dass der Dosierschieber 3 an seinem unteren Ende 20 einen Verdichtungsstempel 21 aufweist, der hier mit einer senkrecht bzw. quer zur Hubachse 5 liegenden ebenen Pressfläche versehen ist. Fig. 4 zeigt hierzu die Anordnung nach Fig. 3, demnach der Dosierschieber 3 ausgehend von der Position nach Fig. 3 in einem weiteren, optionalen Verfahrensschritt noch weiter nach unten in Richtung des Pfeiles 25 abgesenkt ist. Der Press- bzw. Verdichtungsstempel 21 liegt hierbei auf dem in der Zielkavität 23 befindlichen Granulat 1 auf und verdichtet dieses in gewünschter Weise. Alternativ oder zusätzlich zum Verdichtungsstempel 21 können an der Unterseite des Dosierschiebers 3 ein oder mehrere Rüttelfinger 26 angeordnet sein, die in Fig. 1 schematisch dargestellt sind, und die über das untere Ende 20 des Dosierschiebers 3 nach unten hervorstehen. Zwischen den Rüttelfingern 26 befinden sich Zwischenräume. Der Dosierschieber 3 kann damit soweit abgesenkt werden, dass die Rüttelfinger in die Pulver- bzw. Granulatfüllung der Zielkavität 23 hineinragen, während das untere Ende 20 auf oder oberhalb der Füllungsoberfläche verbleibt. In dieser Position führt dann der Dosierschieber 3 eine vertikal oszillierende Schwingbewegung aus, die mittels der Rüttelfinger 26 in die Pulver- bzw. Granulatfüllung der Zielkavität 23 eingetragen wird und dadurch eine Vergleichmäßigung der Füllung mit ebener, bevorzugt randbündiger Oberfläche bewirkt.

Ausgehend von der Position nach Fig. 3 oder Fig. 4, in der der Dosier- bzw. Befüllvorgang abgeschlossen ist, wird der Dosierschieber 3 wieder in seine Ausgangsposition nach Fig. 1 angehoben. Hier ist zu erkennen, dass im Gehäuse 2 unterhalb der Führungsöffnung 6 ein Dichtsitz 16 vorgesehen ist, während am Dosierschieber 3 unterhalb der Dosiervertiefung 9 eine zum Dichtsitz 16 korrespondierende, bevorzugt schräge und hier konische Dichtfläche 17 ausgebildet ist. Beim Anheben des Dosierschiebers 3 in die Ausgangsposition nach Fig. 1 legt sich die Dichtfläche 17 des Dosierschiebers 3 an dem Dichtsitz 16 des Gehäuses 2 dichtend an, so dass ein Nachrieseln von Granulat- bzw. Pulverresten in die Zielkavität 23 vermieden ist. Ausgehend von der nun wieder erreichten Ausgangsposition nach Fig. 1 kann der oben beschriebene Zyklus von Verfahrensschritten erneut durchgeführt werden. Während das erfindungsgemäße Verfahren vorstehend als eine Abfolge von Schritten beschrieben ist, muss dies in der Praxis nicht schrittförmig durchgeführt werden, sondern kann vielmehr in einer zumindest teilweise kontinuierlichen Bewegung des Dosierschiebers 3 erfolgen.

Unter erneutem Bezug auf Fig. 2 ist noch erkennbar, dass der Dosierschieber 3 optional zweiteilig ausgebildet ist und hier ein unteres Schieberteil 18 sowie ein oberes Schieberteil 19 umfasst. Das obere Schieberteil 19 muss sich nicht vollständig oberhalb des unteren Schieberteils 18 befinden. Die Unterscheidung der beiden Schieberteile als unteres Schieberteil 18 und oberes Schieberteil 19 beruht lediglich darauf, dass am unteren Schieberteil 18 die untere Deckfläche 12 und am oberen Schieberteil 19 die obere Deckfläche 13 der Dosiervertiefung 9 ausgebildet sind. Das obere Schieberteil 19 ist hier in einer bestimmten Relativposition zum unteren Schieberteil 18 in Richtung der Hubachse 5 gezeigt, kann aber entsprechend einem Doppelpfeil 24 relativ zum unteren Schieberteil 18 verschoben und damit in seiner Relativposition eingestellt werden. Hierdurch kann der axiale Abstand zwischen der oberen Deckfläche 13 und der unteren Deckfläche 12 und damit das Volumen der Dosiervertiefung 9 bzw. der Dosierkammer 4 variiert und nach Bedarf eingestellt werden.

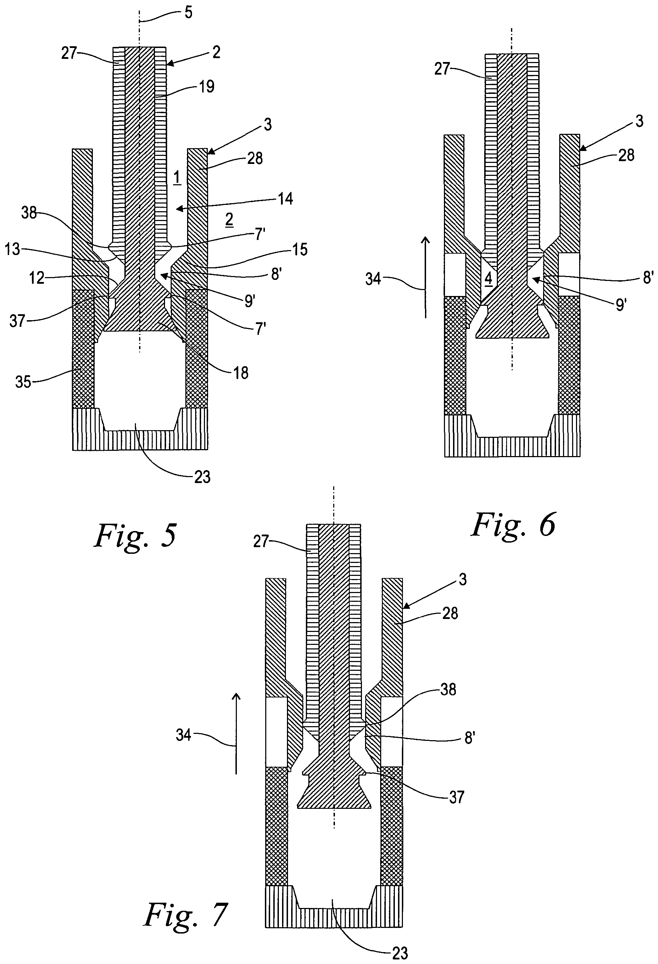

Die Figuren 5 bis 7 zeigen in einer schematischen Längsschnittdarstellung eine Variante der Anordnung nach Fig. 1, die nach dem gleichen erfindungsgemäßen Funktionsprinzip arbeitet, wobei jedoch der Dosierschieber 3 nicht als zentrischer Vertikalschieber, sondern als Vertikalschieber in Form einer Dosierhülse 28 ausgeführt ist, welche einen zentrischen Gehäuseteil in Form eines Dosierzapfen 27 umschließt. Die gezeigte Anordnung wird von einem nicht näher dargestellten Gehäuse 2 umschlossen, wobei als Teil des Gehäuses 2 lediglich der zentrische, während des Dosiervorganges unbewegte Dosierzapfen 27 gezeigt ist. Abweichend vom Ausführungsbeispiel nach den Figuren 1 bis 4 ist im Dosierschieber 3 keine Dosiervertiefung 9 ausgeformt. Stattdessen ist in den zentrischen Dosierzapfen 27 eine ringförmig umlaufende Dosiervertiefung 9' eingebracht.

In ihrem oberen Bereich umschließt die Dosierhülse 28 den mittigen Dosierzapfen 27 mit einem radialen Abstand, innerhalb dessen die Vorratskammer 14 für das nicht näher dargestellte Granulat 1 gebildet ist. Auch hier weist die Vorratskammer 14 einen ringförmig umlaufenden und an der Dosierhülse 28 ausgebildeten Boden 15 auf, der schräg nach unten zu Dosiervertiefung 9' führt.

Vergleichbar zum Ausführungsbeispiel nach den Figuren 1 bis 4 umfasst zwar nicht der Dosierschieber 3, wohl aber der Dosierzapfen 27 als Teil des Gehäuses 2 ein unteres Schieberteil 18 und ein oberes Schieberteil 19 mit korrespondierenden unteren und oberen Deckflächen 12, 13, wobei das obere und das untere Schieberteil 18, 19 in Richtung der Hubachse 5 relativ zueinander einstellbar sind. Hierdurch ist das Volumen der in Fig. 6 dargestellten Dosierkammer 4 einstellbar. Außerdem sind die unteren und oberen Deckflächen 12, 13 vergleichbar zum Ausführungsbeispiel nach den Figuren 1 bis 4 aus der Dosiervertiefung 9' herausführend bzw. in sie hineinführend geneigt. Analog dazu liegen hier die untere Deckfläche 12 sowie die obere Deckfläche 13 im Längsschnitt der Dosiereinrichtung betrachtet derart schräg, dass sich die Dosiervertiefung 9' ausgehend von der äußeren Führungsfläche 7' entlang der Hubachse 5 zur Hubachse 5 hin verjüngt.

Aus dem Vergleich des Ausführungsbeispiels nach den Figuren 5 bis 7 mit demjenigen nach den Figuren 1 bis 4 ergibt sich auch in folgenden Aspekten ein analoger, wenngleich umgekehrter Aufbau:
Der zentral sich entlang der Hubachse 5 erstreckende Dosierzapfen 27 weist eine äußere Führungsfläche 7' auf, während die den Dosierzapfen 27 in Umfangsrichtung umschließende Dosierhülse 28 eine mit der äußeren Führungsfläche 7' korrespondierende innere Begrenzungsfläche 8' aufweist. Demnach ist die Dosiervertiefung 9' ausgehend von der äußeren Führungsfläche 7' in den Dosierzapfen 27 eingebracht. Der als Dosierhülse 28 ausgeführte Dosierschieber 3 und auch der Dosierzapfen 27 als Teil des Gehäuses 2 sind jeweils bezüglich der Hubachse 5 als Rotationskörper ausgeführt, wobei die Dosiervertiefung 9' ringförmig um den Dosierzapfen 27 umläuft. Aufgrund des ringförmigen Umlaufs der Dosiervertiefung 9' wird die äußere Führungsfläche 7' in einen unteren Flächenabschnitt 37 und in einen oberen Flächenabschnitt 38 aufgeteilt, während die korrespondierende innere Begrenzungsfläche 8' insgesamt zylindrisch durchgehend ausgestaltet ist.

In einem ersten Verfahrensschritt und in der Ausgangsposition nach Fig. 5 rieselt das Füllgut bzw. das Granulat 1 aus der Vorratskammer 14 in die Dosiervertiefung 9'. Hierbei liegt die innere Begrenzungsfläche 8' nur am unteren Flächenabschnitt 37, nicht jedoch am oberen Flächenabschnitt 38 an, so dass die Dosiervertiefung 9' nach innen zur Vorratskammer 14 hin offen ist und den Eintritt des Füllgutes zulässt. Aus dem Vergleich der Figuren 5 und 6 ergibt sich, dass die Dosierhülse 28 in einem nachfolgenden Verfahrensschritt und ausgehend von ihrer in Fig. 5 dargestellten Ausgangsposition in Richtung der Hubachse 5 entsprechend einem Pfeil 34 angehoben werden kann. In der dann erreichten, mittleren Hubstellung entsprechend der Darstellung nach Fig. 6 ist die Dosiervertiefung 9' durch die innere Begrenzungsfläche 8' der Dosierhülse 28 vollständig abgedeckt. Die innere Begrenzungsfläche 8' liegt also sowohl am unteren Flächenabschnitt 37 als auch am oberen Flächenabschnitt 38 dichtend an, so dass eine insgesamt geschlossene, durch die Dosiervertiefung 9' und die innere Begrenzungsfläche 8' gebildete Dosierkammer 4 entsteht. Mit anderen Worten ist der Innenraum der Dosierkammer 4 durch die innere Begrenzungsfläche 8', die untere Deckfläche 12, die obere Deckfläche 13 und die radial innere Umfangswand der Dosiervertiefung 9' mit einem definierten Volumen begrenzt und eingeschlossen. Das Volumen der Dosierkammer 4 gibt das Volumen des abzumessenden bzw. des zu dosierenden Granulats 1 vor, wobei das genannte Volumen in oben bereits beschriebener Weise durch eine relative Axialpositionierung des oberen und des unteren Schieberteils 18, 19 eingestellt werden kann.

Im nächsten Verfahrensschritt wird ausgehend von der Darstellung nach Fig. 6 die Dosierhülse 28 weiter in Richtung des Pfeiles 34 angehoben, bis sie die in Fig. 7 dargestellte Position erreicht hat. In dieser oberen Position gibt die innere Begrenzungsfläche 8' der Dosierhülse 28 den unteren Flächenabschnitt 37 des Dosierzapfens 27 frei, wodurch die Dosierkammer 4 ringförmig nach unten offen ist. Das darin enthaltene und volumetrisch abgemessene Granulat 1 rieselt durch den entsprechenden Spalt weiter in die darunter befindlichen Zielkavität 23. Der obere Flächenabschnitt 38 bleibt weiterhin durch die innere Begrenzungsfläche 8' abgedeckt, so dass keine Füllgut bzw. Granulat 1 von oben nachrieseln kann.

Analog zum Ausführungsbeispiel nach den Figuren 1 bis 4 können am Dosierzapfen 27 Verdichtungselemente in Form eines Verdichtungsstempels und/oder eines Rüttelelementes angeordnet sein. Der während des oben beschriebenen Dosiervorganges feststehende Dosierzapfen 27 kann dann ausgehend von seiner hier gezeigten Ruheposition zur Zielkavität 23 hin abgesenkt werden und dort eine Verdichtung bzw. eine Vergleichmäßigung der Füllung herbeiführen. Die Verdichtungsbewegung des im Übrigen feststehenden Dosierzapfens 27 ist dabei losgelöst von der Dosierbewegung der axial beweglichen Dosierhülse 28.

Im gezeigten Ausführungsbeispiel wird jedoch von der vorgenannten Möglichkeit kein Gebrauch gemacht. Vielmehr umfasst die Dosiereinrichtung an ihrer Unterseite eine Überleitungshülse 35, die sich ausgehend von der Dosierhülse 28 nach unten erstreckt und bis an den Rand der darunter befindlichen Zielkavität 23 reicht. Das Querschnittsformat der Dosiereinrichtung muss damit nicht in Übereinstimmung mit dem Grundrissformat der Zielkavität 23 sein, so dass mit der gleichen Dosiereinrichtung unterschiedliche Zielkavitäten 23 mit unterschiedlichen Formen befüllt werden können. In jedem Falle stellt die Überleitungshülse 35 sicher, dass das abgemessene Granulat 1 vollständig in die Zielkavität 23 ungeachtet ihres Formats gelangt. Die Verdichtung des Granulats 1 innerhalb der Zielkavität 23 erfolgt dann in einem separaten Verfahrensschritt an einer nachfolgenden, hier nicht gezeigten Verarbeitungsstation.

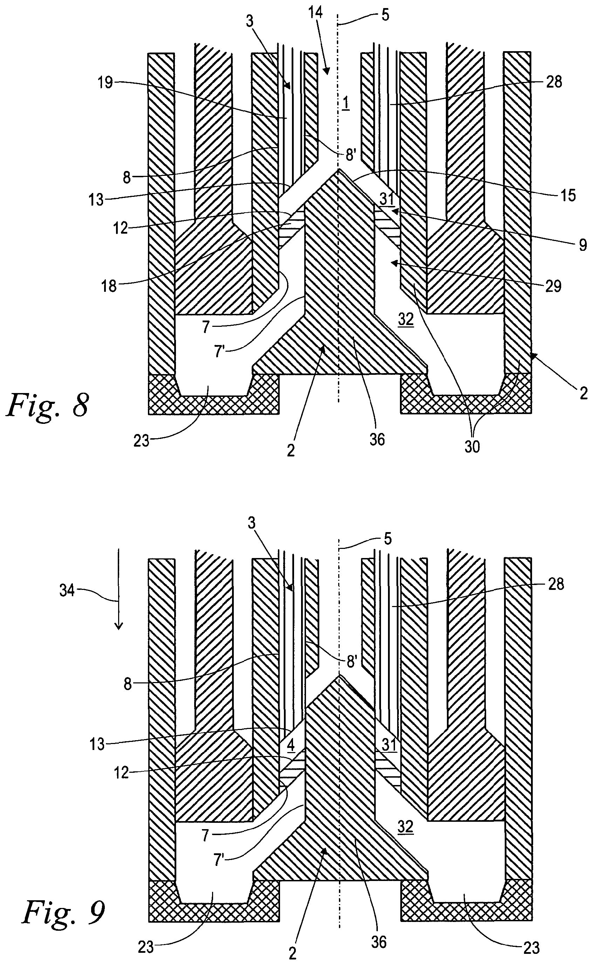

Die Figuren 8 bis 11 zeigen eine weitere Variante der erfindungsgemäßen Dosiereinrichtung. Auch hier ist der Dosierschieber 3 als Vertikalschieber mit einer in gewöhnlicher Betriebsposition vertikaler Hubachse 5 ausgestaltet. Ebenso weist das Gehäuse 2 sich in Richtung der Hubachse 5 erstreckende Führungsflächen 7, 7' für den Dosierschieber 3 auf, während der Dosierschieber 3 mit den Führungsflächen 7, 7' korrespondierende und an den Führungsflächen 7, 7' gleitend anliegende Begrenzungsflächen 8, 8' aufweist. In weiterer Übereinstimmung mit den zuvor abgehandelten Ausführungsbeispielen ist ausgehend von den Begrenzungsflächen 8, 8' in den Dosierschieber 3 mindestens eine Dosiervertiefung 9 in den Dosierschieber 3 eingebracht, wobei die Dosiervertiefung 9 eine untere Deckfläche 12 und eine obere Deckfläche 13 aufweist. In einer mittleren Hubposition des Dosierschiebers 3 entsprechend der Darstellung nach Fig. 9 die Dosiervertiefung 9 durch die Führungsflächen 7, 7' abgedeckt. Hierbei ist die Dosierkammer 4 (Fig. 9) durch die Dosiervertiefung 9 sowie durch die Führungsflächen 7, 7' gebildet.

Im Unterschied zu den vorgenannten Ausführungsbeispielen ist im Gehäuse 2 ein sich entlang der Hubachse 5 erstreckender Ringspalt 29 ausgebildet, der innenseitig durch einen zentralen, ebenfalls zum Gehäuse 2 gehörenden Führungszapfens 36 mit einer äußeren Führungsfläche 7' sowie außenseitig durch ein Gehäuseaußenteil 30 mit einer inneren Führungsfläche 7 begrenzt ist. Die Führungsflächen 7, 7' sind als koaxiale Zylinder ausgestaltet. Der Dosierschieber 3 ist als eine im genannten Ringspalt 29 gleitend geführte Dosierhülse 28 ausgebildet, die eine mit der äußeren Führungsfläche 7' korrespondierende innere Begrenzungsfläche 8' sowie eine mit der inneren Führungsfläche 7 korrespondierende äußere Begrenzungsfläche 8 aufweist.

In der Dosierhülse 28 ist mindestens eine Dosiervertiefung 9 ausgeformt, die hier als ein die Dosierhülse 28 durchbrechendes Fenster 31 ausgestaltet ist. In einer mittleren, in Fig. 9 dargestellten Hubposition der Dosierhülse 28 ist das Fenster 31 innenseitig durch die innere Führungsfläche 7 und gleichzeitig auch auf der Außenseite durch die äußere Führungsfläche derart abgedeckt, dass eine geschlossene, durch das Fenster 31, die innere Führungsfläche 7 und die äußere Führungsfläche 7' gebildete bzw. begrenzte Dosierkammer 4 entsteht. Mit anderen Worten ist der Innenraum der Dosierkammer 4 durch die innere Führungsfläche 7, die äußere Führungsfläche 7', die untere Deckfläche 12 und die obere Deckfläche 13 mit einem definierten Volumen begrenzt und eingeschlossen. Hierzu korrespondierend ist im Gehäuseaußenteil 30 ein schräg nach unten und radial nach außen führender Auslasskanal 32 ausgebildet. Im gezeigten Ausführungsbeispiel sind mehrere, über den Umfang verteilte Fenster 31 sowie eine entsprechende Anzahl von mit den Fenstern 31 korrespondierenden Auslasskanälen 32 vorgesehen und ringsum die Hubachse 5 verteilt angeordnet.

Analog zu den zuvor abgehandelten Ausführungsbeispielen ist im Gehäuse 2 oberhalb der Dosierkammer 4 eine Vorratskammer 14 für das Füllgut ausgebildet, wobei ein Boden 15 der Vorratskammer 14 schräg nach unten zu den Dosiervertiefungen 9 führt. Unter Berücksichtigung der Anzahl der mehreren Dosiervertiefungen 9 ist der schräge Boden 15 im gezeigten Ausführungsbeispiel konisch ausgestaltet, kann aber auch pyramidenförmig oder in analoger Weise mit einzelnen Schrägflächen ausgestaltet sein.

In weiterer Analogie zu den übrigen Ausführungsbeispielen umfasst der Dosierschieber 3 bzw. die Dosierhülse 28 ein unteres Schieberteil 18 sowie ein oberes Schieberteil 19 mit zugehörigen unteren und oberen Deckflächen 12, 13, wobei das untere Schieberteil 18 und das obere Schieberteil 19 bezüglich ihrer in Richtung der Hubachse 5 gemessenen Relativposition gegeneinander einstellbar sind, und wodurch das Volumen der Dosierkammer 4 in zuvor schon beschriebener Weise einstellbar ist.

In den Figuren 8 bis 11 sind entsprechend einer Phasendarstellung verschiedene, zugehörige Verfahrensschritte abgebildet. Im ersten Verfahrensschritt gemäß Fig. 8 ist die Dosierhülse 28 in eine Ausgangsposition angehoben, in der die Dosiervertiefungen 9 radial nach außen durch die innere Führungsfläche 7, nicht aber radial nach innen durch die äußere Führungsfläche 7' abgedeckt sind. Die innere Führungsfläche 7 bildet demnach in dieser Position die radial äußere Wand oder Begrenzung der Dosiervertiefung 9. Das Füllgut bzw. das Granulat 1 rieselt in dieser Position aus der Vorratskammer 14 in die Dosiervertiefungen 9, so dass sich die Dosiervertiefungen 9 mit dem Füllgut füllen. Dieser Befüllungsvorgang wird noch dadurch begünstigt, dass die obere Deckfläche 13 analog zu den weiter oben schon abgehandelten Ausführungsbeispielen im gezeigten Längsschnitt derart schräg liegt, dass sie ausgehend von der Vorratskammer 14 schräg nach unten und radial nach außen in die Dosiervertiefung 9 hineinführt.

Im nächsten Verfahrensschritt gemäß Fig. 9 wird die Dosierhülse 28 entsprechend dem Pfeil 34 soweit abgesenkt, dass die Dosiervertiefungen 9 bzw. die Fenster 31 nicht nur radial nach außen durch die innere Führungsfläche 7', sondern auch radial nach innen durch die äußere Führungsfläche 7 des mittleren Gehäuseteils in Form des Führungszapfens 36 abgedeckt sind. Die hierbei entstehenden Dosierkammern 4 geben dabei mittels ihres zwar einstellbaren, nach erfolgter Einstellung aber geometrisch fest vorgegebenen Volumens das Volumen der abzumessenden bzw. der zu dosierenden Teilmengen des Füllgutes bzw. des Granulats 1 vor.

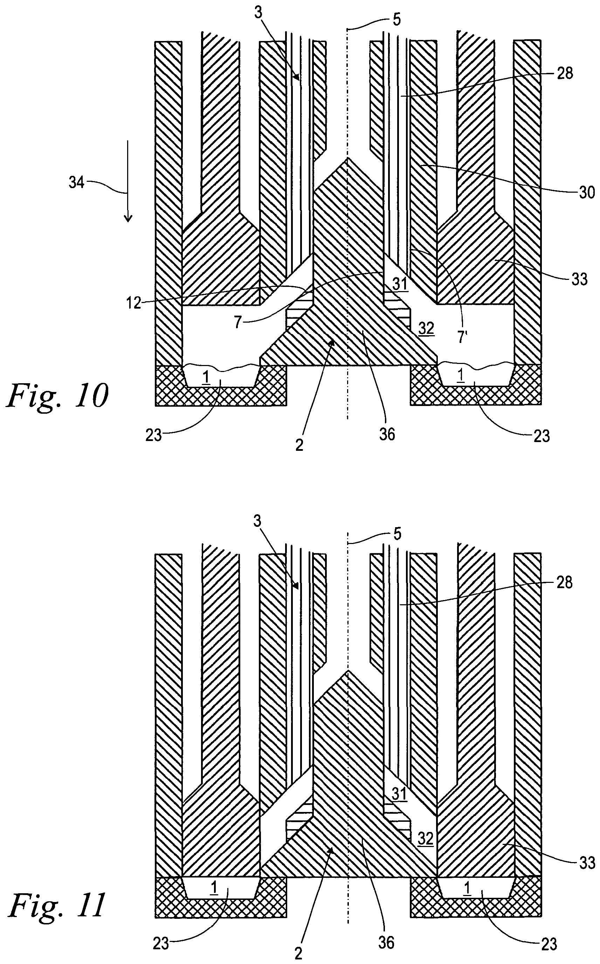

Im nachfolgenden Verfahrensschritt wird die Dosierhülse 28 weiter gemäß dem Pfeil 34 abgesenkt, wie dies in Fig. 10 dargestellt ist. Hierbei kommen die Fenster 31 unterhalb der inneren Führungsflächen 7' des Gehäuseaußenteils 30 zu liegen und befinden sich dabei in Überdeckung mit den zugeordneten, im Gehäuseaußenteil 30 ausgebildeten Auslasskanälen 32, während sie weiterhin radial nach innen durch die äußere Führungsfläche 7 verschlossen sind. Die äußere Führungsfläche 7' bildet hier die radial innere Wand oder Begrenzung der Dosiervertiefung 9. In dieser Position gemäß Fig. 10 rieselt das zuvor dosierte Füllgut bzw. Granulat 1 aus den Dosierkammern 4 (Fig. 9) durch die Auslasskanäle 32 nach unten und gleichzeitig auch radial nach außen in die dort unterhalb der Dosiereinrichtung bereit gestellten Zielkavitäten 23. Dieser Auslassvorgang wird noch dadurch begünstigt, dass die untere Deckfläche 12 analog zu den weiter oben schon abgehandelten Ausführungsbeispielen im gezeigten Längsschnitt derart schräg liegt, dass sie das Füllgut aus der Dosiervertiefung 9 herausführt. Abweichend von den obigen Ausführungsbeispielen ist hier aber mit Rücksicht auf die radial außen angeordneten Auslasskanäle 32 und Zielkavitäten 23 die untere Deckfläche 12 ausgehend von der Innenwand der Dosiervertiefung 9 schräg nach unten und radial nach außen geführt.

In einem optionalen, nachgeordneten Verfahrensschritt gemäß Fig. 11 können Verdichtungselemente 33, die außenseitig des jeweiligen Auslasskanals 32 angeordnet sind, zu den Zielkavitäten 23 hin abgesenkt werden und dort eine Verdichtung bzw. eine Vergleichmäßigung des Granulats 1 innerhalb der Zielkavitäten 23 herbeiführen. Im gezeigten Ausführungsbeispiel sind die Verdichtungselemente 33 in Form von Verdichtungsstempeln ausgeführt. Alternativ oder zusätzlich können auch Rüttelelemente oder dergleichen analog zum Ausführungsbeispiel nach den Figuren 1 bis 4 vorgesehen sein, die durch eine Vibrationsbewegung die genannte Vergleichmäßigung herbeiführen.

Sofern nicht ausdrücklich abweichend erwähnt, stimmen die hier gezeigten Ausführungsbeispiele in ihren übrigen Merkmalen, Bezugszeichen, Verfahrensschritten und Anwendungsmöglichkeiten untereinander überein.

## Patentansprüche

1. Dosiereinrichtung zum volumetrischen Dosieren von rieselfähigem Füllgut, insbesondere von pharmazeutischem Pulver oder Granulat (1), umfassend ein Gehäuse (2) und einen relativ zum Gehäuse (2) bewegbaren Dosierschieber (3), wobei das Gehäuse (2) und der Dosierschieber (3) zusammen eine Dosierkammer (4) begrenzen,
**dadurch gekennzeichnet, dass** der Dosierschieber (3) als Vertikalschieber mit einer in gewöhnlicher Betriebsposition vertikalen Hubachse (5) ausgestaltet ist, dass das Gehäuse (2) eine sich in Richtung der Hubachse (5) erstreckende Führungsfläche (7, 7') für den Dosierschieber (3) aufweist, und dass der Dosierschieber (3) eine mit der jeweiligen Führungsfläche (7, 7') korrespondierende und an der Führungsfläche (7, 7') gleitend anliegende Begrenzungsfläche (8, 8') aufweist, wobei ausgehend von der Begrenzungsfläche (8, 8') in den Dosierschieber (3) eine Dosiervertiefung (9) und/oder ausgehend von der Führungsfläche (7, 7') in das Gehäuse (2) eine Dosiervertiefung (9') eingebracht ist, wobei in einer Hubposition des Dosierschiebers (3), in der die Dosiervertiefung (9, 9') durch die Führungsfläche (7, 7') und/oder durch die Begrenzungsfläche (8') abgedeckt ist, die Dosierkammer (4) durch die Dosiervertiefung (9, 9'), die Führungsfläche (7, 7') und/oder die Begrenzungsfläche (8') gebildet ist.

2. Dosiereinrichtung nach Anspruch 1,
**dadurch gekennzeichnet, dass** im Gehäuse (2) oberhalb der Dosierkammer (4) eine Vorratskammer (14) für das Füllgut ausgebildet ist, wobei ein Boden (15) der Vorratskammer (14) schräg nach unten zur Dosiervertiefung (9, 9') führt.

3. Dosiereinrichtung nach Anspruch 1 oder 2,
**dadurch gekennzeichnet, dass** das Gehäuse (2) und/oder der Dosierschieber (3) ein unteres Schieberteil (18) und ein oberes Schieberteil (19) umfasst, wobei am unteren Schieberteil (18) eine untere Deckfläche (12) und am oberen Schieberteil (19) eine obere Deckfläche (13) der Dosiervertiefung (9, 9') ausgebildet sind, und wobei das untere Schieberteil (18) und das obere Schieberteil (19) in ihrer in Richtung der Hubachse (5) gemessenen Relativposition gegeneinander einstellbar sind.

4. Dosiereinrichtung nach einem der Ansprüche 1 bis 3,
**dadurch gekennzeichnet, dass** die Dosiervertiefung (9, 9') eine untere Deckfläche (12) und eine obere Deckfläche (13) aufweist, wobei im Längsschnitt der Dosiereinrichtung betrachtet die untere Deckfläche (12) aus der Dosiervertiefung (9, 9') herausführend geneigt und/oder die obere Deckfläche (13) in die Dosiervertiefung (9, 9') hineinführend geneigt ist.

5. Dosiereinrichtung nach einem der Ansprüche 1 bis 4,
**dadurch gekennzeichnet, dass** im Gehäuse (2) eine sich entlang der Hubachse (5) erstreckende Führungsöffnung (6) mit einer inneren Führungsfläche (7) für den Dosierschieber (3) ausgebildet ist, dass der Dosierschieber (3) eine mit der inneren Führungsfläche (7) korrespondierende äußere Begrenzungsfläche (8) aufweist, und dass die Dosiervertiefung (9) ausgehend von der äußeren Begrenzungsfläche (8) in den Dosierschieber (3) eingebracht ist, wobei in einer Hubposition des Dosierschiebers (3), in der die Dosiervertiefung (9) durch die innere Führungsfläche (7) abgedeckt ist, die Dosierkammer (4) durch die Dosiervertiefung (9) und die innere Führungsfläche (7) gebildet ist.

6. Dosiereinrichtung nach Anspruch 5,
**dadurch gekennzeichnet, dass** der Dosierschieber (3) bezüglich der Hubachse (5) als Rotationskörper ausgeführt ist, wobei die Dosiervertiefung (9) ringförmig umläuft und dabei die äußere Begrenzungsfläche (8) in einen unteren Flächenabschnitt (10) und einen oberen Flächenabschnitt (11) aufteilt, und wobei die innere Führungsfläche (7) der Führungsöffnung (6) zylindrisch ausgestaltet ist.

7. Dosiereinrichtung nach Anspruch 5 oder 6,
**dadurch gekennzeichnet, dass** die untere Deckfläche (12) und/oder die obere Deckfläche (13) im Längsschnitt des Dosierschiebers (3) betrachtet derart schräg liegen, dass sich die Dosiervertiefung (9) ausgehend von der Begrenzungsfläche (8) entlang der Hubachse (5) zur Hubachse (5) hin verjüngt.

8. Dosiereinrichtung nach einem der Ansprüche 5 bis 7,
**dadurch gekennzeichnet, dass** im Gehäuse (2) unterhalb der Führungsöffnung (6) ein Dichtsitz (16) vorgesehen ist, wobei am Dosierschieber (3) unterhalb der Dosiervertiefung (9) eine zum Dichtsitz (16) korrespondierende, bevorzugt schräge und insbesondere konische Dichtfläche (17) ausgebildet ist.

9. Dosiereinrichtung nach einem der Ansprüche 5 bis 8,
**dadurch gekennzeichnet, dass** der Dosierschieber (3) an seinem unteren Ende (20) einen Verdichtungsstempel (21) und/oder mindestens einen Rüttelfinger (26) aufweist.

10. Dosiereinrichtung nach einem der Ansprüche 1 bis 4,
**dadurch gekennzeichnet, dass** das Gehäuse (2) einen sich entlang der Hubachse (5) erstreckenden zentralen Dosierzapfen (27) mit einer äußeren Führungsfläche (7') für den Dosierschieber (3) umfasst, dass der Dosierschieber (3) als eine den Dosierzapfen (27) in Umfangsrichtung umschließende Dosierhülse (28) ausgebildet ist und eine mit der äußeren Führungsfläche (7') korrespondierende innere Begrenzungsfläche (8') aufweist, und dass die Dosiervertiefung (9') ausgehend von der äußeren Führungsfläche (7') in den Dosierzapfen (27) eingebracht ist, wobei in einer Hubposition der Dosierhülse (28), in der die Dosiervertiefung (9') durch die innere Begrenzungsfläche (8') abgedeckt ist, die Dosierkammer (4) durch die Dosiervertiefung (9') und die innere Begrenzungsfläche (8') gebildet ist.

11. Dosiereinrichtung nach Anspruch 10,
**dadurch gekennzeichnet, dass** der Dosierzapfen (27) bezüglich der Hubachse (5) als Rotationskörper ausgeführt ist, wobei die Dosiervertiefung (9') ringförmig umläuft und dabei die äußere Führungsfläche (7') in einen unteren Flächenabschnitt (37) und einen oberen Flächenabschnitt (38) aufteilt, und wobei die innere Begrenzungsfläche (8') der Dosierhülse (28) zylindrisch ausgestaltet ist.

12. Dosiereinrichtung nach Anspruch 10 oder 11,
**dadurch gekennzeichnet, dass** die untere Deckfläche (12) und/oder die obere Deckfläche (13) im Längsschnitt der Dosiereinrichtung betrachtet derart schräg liegen, dass sich die Dosiervertiefung (9') ausgehend von der äußeren Führungsfläche (7') entlang der Hubachse (5) zur Hubachse (5) hin verjüngt.

13. Dosiereinrichtung nach einem der Ansprüche 1 bis 4,
**dadurch gekennzeichnet, dass** im Gehäuse (2) ein sich entlang der Hubachse (5) erstreckender Ringspalt (29) ausgebildet ist, der innenseitig durch einen zentralen Führungszapfen (36) mit einer äußeren Führungsfläche (7') sowie außenseitig durch ein Gehäuseaußenteil (30) mit einer inneren Führungsfläche (7) für den Dosierschieber (3) begrenzt ist, dass der Dosierschieber (3) als eine im Ringspalt (29) gleitend geführte Dosierhülse (28) ausgebildet ist und eine mit der äußeren Führungsfläche (7') korrespondierende innere Begrenzungsfläche (8') sowie eine mit der inneren Führungsfläche (7) korrespondierende äußere Begrenzungsfläche (8) aufweist, dass mindestens eine Dosiervertiefung (9) durch ein die Dosierhülse (28) durchbrechendes Fenster (31) gebildet ist, wobei in einer Hubposition der Dosierhülse (28), in der die mindestens eine Dosiervertiefung (9) durch die innere und die äußere Führungsfläche (7, 7') abgedeckt ist, die Dosierkammer (4) durch die Dosiervertiefung (9), die innere Führungsfläche (7) und die äußere Führungsfläche (7') gebildet ist, und dass im Gehäuseaußenteil (30) ein mit dem Fenster (31) korrespondierender Auslasskanal (32) ausgebildet ist.

14. Dosiereinrichtung nach Anspruch 13,
**dadurch gekennzeichnet, dass** mehrere, über den Umfang verteilte Fenster (31) in der Dosierhülse (28) ausgebildet sind, und dass eine entsprechende Anzahl von mit den Fenstern (31) korrespondierenden Auslasskanälen (32) im Gehäuseaußenteil (30) ausgebildet ist.

15. Dosiereinrichtung nach Anspruch 13 oder 14,
**dadurch gekennzeichnet, dass** außenseitig des jeweiligen Auslasskanals (32) ein Verdichtungselement (33) insbesondere in Form eines Verdichtungsstempels und/oder eines Rüttelelementes angeordnet ist.

16. Dosiereinrichtung nach einem der Ansprüche 1 bis 15,
**dadurch gekennzeichnet, dass** die Dosiereinrichtung an ihrer Unterseite eine Überleitungshülse (35) für den Anschluss an eine Zielkavität (23) aufweist.

## Claims

1. Metering apparatus for the volumetric metering of free-flowing materials, in particular pharmaceutical powder or granulate (1), comprising a housing (2) and a metering slide (3) movable relative to the housing (2), the housing (2) and the metering slide (3) together bounding a metering chamber (4), **characterised in that** the metering slide (3) is designed as a vertical slide with a vertical stroke axis (5) in the normal operating position, **in that** the housing (2) has a guide surface (7, 7') extending in the direction of the stroke axis (5) for the metering slide (3), and **in that** the metering slide (3) has a boundary surface (8, 8') corresponding to the respective guide surface (7, 7') and being in sliding contact with the guide surface (7, 7'), wherein, starting from the boundary surface (8, 8'), a metering recess (9) is introduced into the metering slide (3) and/or, starting from the guide surface (7, 7'), a metering recess (9') is introduced into the housing (2), wherein, in a stroke position of the metering slide (3) in which the metering recess (9, 9') is covered by the guide surface (7, 7') and/or by the boundary surface (8, 8'), the metering chamber (4) is formed by the metering recess (9, 9'), the guide surface (7, 7') and/or the boundary surface (8').

2. Metering apparatus according to claim 1,
**characterised in that** a reservoir (14) for the material is formed in the housing (2) above the metering chamber (4), a base (15) of the reservoir (14) leading downwards at an angle to the metering recess (9, 9').

3. Metering apparatus according to claim 1 or 2,
**characterised in that** the housing (2) and/or the metering slide (3) comprise(s) a lower slide part (18) and an upper slide part (19), wherein a lower cover surface (12) of the metering recess (9, 9') is formed at the lower slide part (18) and an upper cover surface (13) of the metering recess (9, 9') is formed at the upper slide part (19), and wherein the lower slide part (18) and the upper slide part (19) are mutually adjustable in their relative position as measured in the direction of the stroke axis (5).

4. Metering device according to any of claims 1 to 3,
**characterised in that** the metering recess (9, 9') has a lower cover surface (12) and an upper cover surface (13), wherein, in a longitudinal view of the metering apparatus, the lower cover surface (12) is inclined leading out of the metering recess (9, 9') and/or the upper cover surface (13) is inclined leading into the metering recess (9, 9').

5. Metering apparatus according to any of claims 1 to 4,
**characterised in that** a guide opening (6) extending along the stroke axis (5) and having an inner guide surface (7) for the metering slide (3) is formed in the housing (2), **in that** the metering slide (3) has an outer boundary surface (8) corresponding to the inner guide surface (7), and **in that** the metering recess (9) is introduced into the metering slide (3) starting from the outer boundary surface (8), wherein, in a stroke position of the metering slide (3) in which the metering recess (9) is covered by the inner guide surface (7), the metering chamber (4) is formed by the metering recess (9) and the inner guide surface (7).

6. Metering apparatus according to claim 5,
**characterised in that** the metering slide (3) is designed as a rotational body relative to the stroke axis (5), wherein the metering recess (9) extends in an annular fashion while dividing the outer boundary surface (8) into a lower surface section (10) and an upper surface section (11), and wherein the inner guide surface (7) of the guide opening (6) is designed to be cylindrical.

7. Metering apparatus according to claim 5 or 6,
**characterised in that** the lower cover surface (12) and/or the upper cover surface (13) is/are, in a longitudinal section of the metering slide (3), inclined in such a way that the metering recess (9) tapers from the boundary surface (8) towards the stroke axis (5) along the stroke axis (5).

8. Metering apparatus according to any of claims 5 to 7,
**characterised in that** a seating (16) is provided in the housing (2) below the guide opening (6), wherein a preferably inclined and in particular conical sealing face (17) corresponding to the seating (16) is formed at the metering slide (3) below the metering recess (9).

9. Metering apparatus according to any of claims 5 to 8,
**characterised in that** the metering slide (3) has a compacting plunger (21) and/or at least one agitating finger (26) at its lower end (20).

10. Metering apparatus according to any of claims 1 to 4,
**characterised in that** the housing (2) comprises a central metering pin (27) extending along the stroke axis (5) and having an outer guide surface (7') for the metering slide (3), **in that** the metering slide (3) is designed as a metering sleeve (28) enclosing the metering pin (27) in the circumferential direction and has an inner boundary surface (8') corresponding to the outer guide surface (7'), and **in that** the metering recess (9') is introduced into the metering pin (27) from the outer guide surface (7'), wherein, in a stroke position of the metering sleeve (28) in which the metering recess (9') is covered by the inner boundary surface (8'), the metering chamber (4) is formed by the metering recess (9') and the inner boundary surface (8').

11. Metering apparatus according to claim 10,
**characterised in that** the metering pin (27) is designed as a body of revolution relative to the stroke axis (5), wherein the metering recess (9') circulates in an annular fashion while dividing the outer guide surface (7') into a lower surface section (37) and an upper surface section (38), and wherein the inner boundary surface (8') of the metering sleeve (28) is cylindrical.

12. Metering apparatus according to claim 10 or 11,
**characterised in that** the lower cover surface (12) and/or the upper cover surface (13), in a longitudinal view of the metering apparatus, are inclined in such a way that the metering recess (9') tapers from the outer guide surface (7') along the stroke axis (5) towards the stroke axis (5).

13. Metering apparatus according to any of claims 1 to 4,
**characterised in that** an annular gap (29), which extends along the stroke axis (5) and is bounded on the inside by a central guide pin (36) with an outer guide surface (7') and on the outside by a housing outer part (30) with an inner guide surface (7), is formed in the housing (2), **in that** the metering slide (3) is designed as a metering sleeve (28), which is guided to slide in the annular gap (29) and has an inner boundary surface (8') corresponding to the outer guide surface (7') and an outer boundary surface (8) corresponding to the inner guide surface (7), **in that** at least one metering recess (9) is represented by a window (31) through the metering sleeve (28), wherein, in a stroke position of the metering sleeve (28) in which the at least one metering recess (9) is covered by the inner and the outer guide surface (7, 7'), the metering chamber (4) is formed by the metering recess (9), the inner guide surface (7) and the outer guide surface (7'), and **in that** an outlet port (32) corresponding to the window (31) is formed in the housing outer part (30).

14. Metering apparatus according to claim 13,
**characterised in that** several windows (31) distributed along the circumference are formed in the metering sleeve (28), and **in that** a number of outlet ports (32) corresponding to the windows (31) is formed in the housing outer part (30).

15. Metering apparatus according to claim 13 or 14,
**characterised in that** a compacting element (33), in particular in the form of a compacting plunger and/or of an agitating element, is located on the outside of the respective outlet port (32).

16. Metering apparatus according to any of claims 1 to 15,
**characterised in that** the metering apparatus has on its underside a transfer sleeve (35) for connection to a target cavity (23).

## Revendications

1. Appareil de dosage pour le dosage volumétrique d'un produit de remplissage apte à s'écouler, en particulier de poudre ou de granulat pharmaceutique (1), comprenant un boîtier (2) et un coulisseau de dosage (3) qui est mobile par rapport au boîtier (2), le boîtier (2) et le coulisseau de dosage (3) délimitant conjointement une chambre de dosage (4),
**caractérisé en ce que** le coulisseau de dosage (3) est conçu comme un coulisseau vertical, avec un axe de course (5) qui est vertical dans la position de fonctionnement habituelle, **en ce que** le boîtier (2) présente une surface de guidage (7, 7'), pour le coulisseau de dosage (3), qui s'étend dans le sens de l'axe de course (5), et **en ce que** le coulisseau de dosage (3) présente une surface de délimitation (8, 8') qui correspond à la surface de guidage (7, 7') et qui est appliquée de manière coulissante contre celle-ci, un creux de dosage (9) étant réalisé dans le coulisseau de dosage (3) à partir de la surface de délimitation (8, 8') et/ou un creux de dosage (9') étant réalisé dans le boîtier (2) à partir de la surface de guidage (7, 7'), la chambre de dosage (4) étant formée, dans une position de course du coulisseau de dosage (3) dans laquelle le creux de dosage (9, 9') est recouvert par la surface de guidage (7, 7') et/ou par la surface de délimitation (8'), par le creux de dosage (9, 9'), la surface de guidage (7, 7') et/ou la surface de délimitation (8').

2. Appareil de dosage selon la revendication 1,
**caractérisé en ce qu'**une chambre formant réservoir (14) pour le produit de remplissage est formée dans le boîtier (2), au-dessus de la chambre de dosage (4), un fond (15) de la chambre formant réservoir (14) menant, en biais vers le bas, au creux de dosage (9, 9').

3. Appareil de dosage selon la revendication 1 ou 2,
**caractérisé en ce que** le boîtier (2) et/ou le coulisseau de dosage (3) comprennent un élément de coulisseau inférieur (18) et un élément de coulisseau supérieur (19), une surface de recouvrement inférieure (12) étant formée sur l'élément de coulisseau inférieur (18), et une surface de recouvrement supérieure (13) du creux de dosage (9, 9') étant formée sur l'élément de coulisseau supérieur (19), et la position relative de l'élément de coulisseau inférieur (18) et de l'élément de coulisseau supérieur (19), mesurée dans le sens de l'axe de course (5), étant réglable.

4. Appareil de dosage selon l'une des revendications 1 à 3,
**caractérisé en ce que** le creux de dosage (9, 9') présente une surface de recouvrement inférieure (12) et une surface de recouvrement supérieure (13), la surface de recouvrement inférieure (12) étant inclinée pour un guidage hors du creux de dosage (9, 9') et/ou la surface de recouvrement supérieure (13) étant inclinée pour un guidage jusque dans le creux de dosage (9, 9'), si on regarde l'appareil de dosage en coupe longitudinale.

5. Appareil de dosage selon l'une des revendications 1 à 4,
**caractérisé en ce qu'**il est prévu, formée dans le boîtier (2), une ouverture de guidage (6) qui s'étend le long de l'axe de course (5), avec une surface de guidage intérieure (7) pour le coulisseau de dosage (3), **en ce que** le coulisseau de dosage (3) présente une surface de délimitation extérieure (8) qui correspond à la surface de guidage intérieure (7), **en ce que** le creux de dosage (9) est réalisé dans le coulisseau de dosage (3) à partir de la surface de délimitation extérieure (8), la chambre de dosage (4), dans une position de course du coulisseau de dosage (3) dans laquelle le creux de dosage (9, 9') est recouvert par la surface de guidage intérieure (7), étant formée par le creux de dosage (9, 9') et ladite surface de guidage intérieure (7).

6. Appareil de dosage selon la revendication 5,
**caractérisé en ce que** le coulisseau de dosage (3) est conçu par rapport à l'axe de course (5) comme un corps de rotation, le creux de dosage (9) ayant une forme annulaire, divisant ainsi la surface de délimitation extérieure (8) en une section de surface inférieure (10) et une section de surface supérieure (11), et la surface de guidage (7) de l'ouverture de guidage (6) ayant une forme cylindrique.

7. Appareil de dosage selon la revendication 5 ou 6,
**caractérisé en ce que** la surface de recouvrement inférieure (12) et/ou la surface de recouvrement supérieure (13), vues sur une coupe longitudinale du coulisseau de dosage (3), sont inclinées de telle sorte que le creux de dosage (9), à partir de la surface de délimitation (8), va en diminuant le long de l'axe de course (5) en direction de celui-ci.

8. Appareil de dosage selon l'une des revendications 5 à 7,
**caractérisé en ce qu'**il est prévu dans le boîtier (2), au-dessous de l'ouverture de guidage (6), un siège d'étanchéité (16), une surface d'étanchéité (17) de préférence inclinée et en particulier conique qui correspond au siège d'étanchéité (16) étant formée sur le coulisseau de dosage (3), au-dessous du creux de dosage (9).

9. Appareil de dosage selon l'une des revendications 5 à 8,
**caractérisé en ce que** le coulisseau de dosage (3) présente sur son extrémité inférieure (20) un poinçon de compactage (21) et/ou au moins une saillie de secouage (26).

10. Appareil de dosage selon l'une des revendications 1 à 4,
**caractérisé en ce que** le boîtier (2) comprend un tourillon de dosage central (27) qui s'étend le long de l'axe de course (5), avec une surface de guidage extérieure (7') pour le coulisseau de dosage (3), **en ce que** le coulisseau de dosage (3) est conçu comme un manchon de dosage (28) qui entoure le tourillon de dosage (27) dans le sens circonférentiel, et une surface de délimitation intérieure (8') qui correspond à la surface de guidage extérieure (7'), et **en ce que** le creux de dosage (9') est réalisé dans le tourillon de dosage (27) à partir de la surface de guidage extérieure (7'), la chambre de dosage (4) étant formée, dans une position de course du manchon de dosage (28) dans laquelle le creux de dosage (9') est recouvert par la surface de délimitation intérieure (8'), par le creux de dosage (9') et la surface de délimitation intérieure (8').

11. Appareil de dosage selon la revendication 10,
**caractérisé en ce que** le tourillon de dosage (27) est conçu par rapport à l'axe de course (5) comme un corps de rotation, le creux de dosage (9') ayant une forme annulaire, divisant ainsi la surface de guidage extérieure (7') en une section de surface inférieure (37) et une section de surface supérieure (38), et la surface de délimitation intérieure (8') du manchon de dosage (28) ayant une forme cylindrique.

12. Appareil de dosage selon la revendication 10 ou 11,
**caractérisé en ce que** la surface de recouvrement inférieure (12) et/ou la surface de recouvrement supérieure (13), vues sur une coupe longitudinale du coulisseau de dosage, sont inclinées de telle sorte que le creux de dosage (9'), à partir de la surface de guidage extérieure (7'), va en diminuant le long de l'axe de course (5) en direction de celui-ci.

13. Appareil de dosage selon l'une des revendications 1 à 4,
**caractérisé en ce qu'**il est prévu, formé dans le boîtier (2), un espace annulaire (29) qui s'étend le long de l'axe de course (5) et qui est délimité, côté intérieur, par un tourillon de guidage central (36) pourvu d'une surface de guidage extérieure (7') et, côté extérieur, par une partie extérieure de boîtier (30) pourvue d'une surface de guidage intérieure (7) pour le coulisseau de dosage (3), **en ce que** le coulisseau de dosage (3) est conçu comme un manchon de dosage (28) guidé de manière coulissante dans ledit espace annulaire (29), et présente une surface de délimitation intérieure (8') correspondant à la surface de guidage extérieure (7'), et une surface de délimitation extérieure (8) correspondant à la surface de guidage intérieure (7), **en ce qu'**au moins un creux de dosage (9) est formé par une fenêtre (31) qui traverse le manchon de dosage (28), la chambre de dosage (4) étant formée, dans une position de course du manchon de dosage (28) dans laquelle le ou les creux de dosage (9) sont recouverts par les surfaces de guidage intérieure et extérieure (7, 7'), par le creux de dosage (9), la surface de guidage intérieure (7) et la surface de guidage extérieure (7'), et **en ce qu'**un conduit de sortie (32) correspondant à la fenêtre (31) est formé dans la partie extérieure de boîtier (30).

14. Appareil de dosage selon la revendication 13,
**caractérisé en ce que** plusieurs fenêtres (31) réparties sur la circonférence sont formées dans le manchon de dosage (28), et **en ce qu'**un nombre correspondant de conduits de sortie (32) qui correspondent à la fenêtre (31) sont formés dans la partie extérieure de boîtier (30).

15. Appareil de dosage selon la revendication 13 ou 14,
**caractérisé en ce que** sur le côté extérieur de chaque conduit de sortie (32) est disposé un élément d'étanchéité (33), en particulier sous la forme d'un poinçon de compactage et/ou d'un élément de secouage.

16. Appareil de dosage selon l'une des revendications 1 à 15,
**caractérisé en ce que** l'appareil de dosage comporte sur son côté inférieur un manchon de transfert (35) pour le raccordement à une cavité de destination (23).
